Europäisches Patentamt

European Patent Office    (11) Publication number:    **0 076 786**

Office européen des brevets    **B1**

(19)

(12)    **EUROPEAN PATENT SPECIFICATION**

(45) Date of publication of patent specification: **19.02.86**    (51) Int. Cl.⁴: **A 01 D 90/04**

(21) Application number: **82830241.4**

(22) Date of filing: **23.09.82**

(54) Device for lifting and cutting forage in a self-loading forage wagon.

(30) Priority: **05.10.81 IT 2432081**

(43) Date of publication of application:
**13.04.83 Bulletin 83/15**

(45) Publication of the grant of the patent:
**19.02.86 Bulletin 86/08**

(84) Designated Contracting States:
**AT BE CH DE FR LI NL**

(56) References cited:
**DE-A-2 730 308**
**DE-A-3 022 630**
**DE-B-1 190 718**
**DE-U-1 974 343**

(73) Proprietor: **EUGENIO MARANGON & FIGLIO
S.N.C.
11, Via Valsugana
I-35010 San Giorgio in Bosco Padova (IT)**

(72) Inventor: **Barato, Paolo
2 Via Ampezzan
I-35100 Padova (IT)**
Inventor: **Marangon, Eugenio
11 Via Valsugana
I-35010 San Girgio in Bosco Padova (IT)**

(74) Representative: **Calvani, Domenico
UFFICIO BREVETTI ING. CALVANI, SALVI &
VERONELLI 4, Piazza Duca d'Aosta
I-20124 Milan (IT)**

Courier Press, Leamington Spa, England.

## Description

The present invention relates to a device for lifting and cutting forage in a selfloading forage wagon, this device being of the type comprising a plurality of lifting blades, usually referred to as "forks", which pick up the forage, transport it in a channel in which cutting knives can project, and then unload it.

At present, in the self-loading wagon for the forage harvesting various harvesting devices are used, for example chain elevators or reciprocating elevators provided with rotatable forks capable of being retracted by means of cams or links. In alternative to these harvesting devices which require always a retraction movement of the forks and perform simultaneously both the forage lifting and cutting operations, devices formed of two components can be provided, namely devices comprising a rotor performing the cutting operation associated to a chain elevator or the like, which performs the lifting operation of the forage to convey it in the wagon.

The general problems these devices are confronted with, are to convey the forage in the loading channel in such a manner that it is as uniform as possible, by performing a regular cut of the forage and mainly avoiding the deterioration of its qualities due to tearing or pressing actions, particularly to pressing actions against the walls supporting the knives.

The above mentioned prior art devices are always designed in such a manner as to try to meet these requirements, while maintaining the mechanical properties of the device. However, these prior art devices generally have various disadvantages, since those performing simultaneously the cutting and lifting operations are provided with a great number of components movable relative to each other in order to perform the retraction movement of the forks and therefore they are stiffless and inaccurate. As a result, they do not lend themselves for high harvesting speeds, require an expensive and frequent maintenance, are subjected to a very strong wear and are very expensive from the initial cost and operating standpoint. Furthermore, during the cutting operation in the case of the rotating elevators or else during the lifting operation in the csae of the reciprocating elevators, a damaging and partial deterioration effect of the forage is always present, and this due to the fraying and compression of the forage itself.

The devices having the cutting and lifting operations separate from each other suffer also substantially from the same disadvantages, i.e. greater mechanical complexity, greater overall dimensions and higher initial and operational costs.

DE—U—1 974 343 shows a cutting and lifting device for forage having rotating forks with arc-shaped edges, said forks cooperating with knives which are approximately radially arranged with reference to the fork path, as well as with an arc-shaped comb. This device, due to the small diameter of the fork path, to the knife position and to the comb shape and position, has many drawbacks, in particular with reference to the cutting ability and uniformity, as well as to the forage lifting ability at a level above said comb.

This being stated, an object of the present invention is to provide a device permitting the simultaneous lifting and cutting operations to be performed on the forage in a self-loading forage wagon, without being affected by the disadvantages of the prior art devices and assuring at the same time the best forage treatment conditions, in order to avoid any forage deterioration both during the cutting and the lifting operations thereof.

More particularly, the abovestated object involves to ensure a uniform conveying of the forage to the knives, as well as a clean discharge of cut forage from the forks downstream of the knives so to allow without drawbacks to have a long-radius circular path of the forks.

According to the invention, it is provided a device for lifting and cutting forage in a self-loading forage wagon, of the type having a plurality of shaped forks which pick-up the forage, transport it in a channel in which cutting knives project and then unload it, wherein said forks are rigidly mounted to the periphery of a rotor rotating about its own axis and have arc-shaped front edges, and wherein metal sections retain the cut forage at the outlet of said cutting channel while said forks are passing through free spaces provided between said metal sections, characterized in that said cutting knives are arranged in the outlet portion of the arc path of the forks with the forage and form a small angle with the tangent to the fork circular path so as to gradually engage the forks, and in that said metal sections comprise S-shaped portions to widen said cutting channel near the area wherein said forks leave the same.

According to this invention, it is possible in a cutting rigid and rotating assembly to increase the rotation diameter of the forks to have sufficient lifting lengths, without increasing the instantaneous shearing stresses, by combining the relatively great diameter of the rotor, for example, above 600 mm, with the position of the knives along the cutting channel with the gradual engagement of the forks with the knives and the comb metal sections along a remarkable length of their movement path.

These and other features and characteristics of the invention will be now described in more detail in connection with the accompanying diagrammatic drawing, wherein,

Fig. 1 is a side view with broken away portions, illustrating in a diagrammatic manner the forage cutting and lifting device according to this invention;

Fig. 2 is a diagrammatic view of the same device, in a smaller scale than that of Fig. 1, illustrating the arrangement and the fork supporting means forming the rotor of this device;

Fig. 3 is a top plan view showing a detail of the fork mounting, taken along the line A—A of Fig. 1.

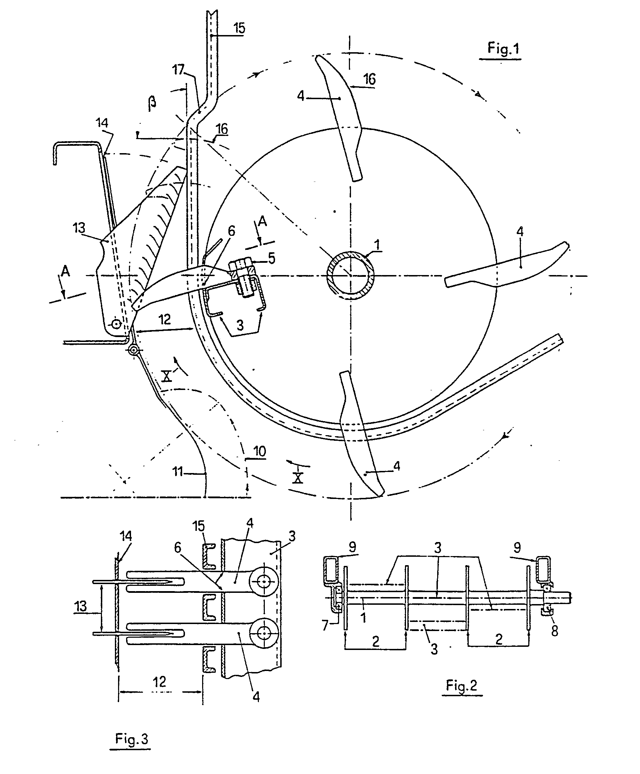

The device shown in the drawing comprises substantially a rotor in the form of a shaft 1, to which partition and support discs 2 forming along the shaft, for example, three portions of the same length are fastened. Also secured to each pair of discs 2 are support elements 3 for the forks 4, these supports being preferably six in number, arranged at 60° to each other in each portion so as to have a total of eighteen supports. Furthermore, the support elements of the different portions are angularly offset 20° to each other so as to make a cut each 20° of rotor rotation, thereby reducing and uniforming the shear stresses. It is to be noted that in Fig. 1 for simplifying the drawing only four forks 4 instead of six are shown. The forks 4 are preferably obtained by a stamping operation to have forks of maximum accuracy. The forks 4 are secured to the support elements 3 by means of screws 5 or by welding, for example, and their positioning is assured by a suitably conformed seat 6 provided in the associated support element 3. The so obtained rotor forms a single structure, which is stiffened by the components thereof and is supported in bearings 7, 8, in turn secured to the beams of the forage wagon. As it will be seen better hereinafter, the bearings 7, 8 are the sole portions subjected to wear of all the device.

As clearly shown in Fig. 1, the just described rotor is mounted on the forage wagon so as to rotate in the direction of the arrow X, downstream from a known pick-up device 11, which in Fig. 1 is only diagrammatically shown together with the path followed by its retractable teeth and indicated in 10. The forage lifted by the retractable teeth of the pick-up device 11 is taken by the forks 4 and lifted by the rotation of rotor so as to be conveyed in the channel 12, where it can be cut by means of a plurality of knives 13, secured to a counter-wall 14 and which can be removed or possibly retracted.

From Fig. 1 it can be noted that, on the side opposite the counter-wall 14, the channel 12 is defined by a wall formed of a plurality of metal sections 15, e.g. C-sections, as indicated in Fig. 3, which are spaced from each other in order to permit the free passage of the forks 4 during their rotation. The wall 15 and the counter-wall 14 extend somewhat the channel 12 downstream from the knives 13, after which the forage, which has been cut and simultaneously lifted by the forks 4 is fed to the forage wagon.

In order to have the above mentioned operation accomplished by the forks 4 under the best conditions, it is necessary for them to be able to convey the forage in the loading channel 12 in a manner as uniform as possible, by preventing at the same time the forage from being pressed against the wall 14 supporting the knives 13 and its quality so deteriorated. Furthermore, the forks must be formed and mounted with the best accuracy and they must have the minimum clearance when passing the knives in order to obtain a net cut without pressing the forage. Finally, it is necessary that the forks do not draw therewith the forage at the outlet of the channel 12, and that the forage is not pressed between the forks and the C-sections 15 when the forks are exiting from the channel 12 at the C-sections 15.

The necessary requirements for performing the first and the last of the above mentioned operating conditions, namely to avoid pressing of the forage on the wall 14 or on the outlet portion of the C-sections 15, are met through a suitable choice of the optimal passage section of the forage and the rotation diameter of the fork ends, which preferably is at least equal to 600 mm, as well as the configuration of the front edge of the forks, which must have such a contour as to assure that, in the outlet portion of the C-sections 15 the edge of the forks forms always, with the tangent in the point of contact with the C-sections 15, an angle β greater than 75° with respect to the center line of the C-sections 15 in the same point. Also, the contour of the forks must be so shaped that the end portion thereof does not lock the forage against the wall 14, this shape obviously depending on the arrangement of the wall 14 and on the rotor diameter, as well as on the end angle of the fork edge.

The above mentioned values of the fork diameter are designed to have, according to this invention, a sufficient transport length to lift the forage and to have it simultaneously cut in a progressive manner and guided along a great path length. In fact, as is seen, the forks gradually engage the knives, thereby minimizing the instantaneous shear stress.

At the outlet of the channel 12, the C-sections 15 are provided with a S-shaped portion, indicated in 17, intended to prevent the pressing of the forage near the outlet area of the forks 4, this S-shaped portion cooperating also to prevent any damage of the forage.

As to the requirement to form the minimum clearance between forks 4 and knives 13, in order to have a net cut of the forage, this is met by the device formed as a single structure, the components of which, particularly the forks, are rigidly fixed thereto, so that there is no longer the need of having the ample clearances required by the lifting and cutting devices with retractable forks, due to the mechanical complexity of these devices.

From the foregoing, it will be apparent that various changes and modifications can be made to the described and illustrated embodiment, without departing from the scope of the invention as defined in the appended claims.

### Claims

1. A device for lifting and cutting forage in a self-loading forage wagon, of the type having a plurality of shaped forks (4) which pick-up the forage, transport it in a cutting channel (12) into which cutting knives (13) project and then unload it, wherein said forks (4) are rigidly mounted to the periphery of a rotor (1, 2) rotating about its own axis said forks having arc-shaped front edges and wherein metal sections (15) retain the cut forage at the outlet of said cutting channel (12) while said forks (4) are passing through free spaces provided between said metal sections (15), characterized in that said cutting knives (13) are arranged in the outlet portion of the arc path of the forks (4) with the forage and whose cutting edges form a small angle with the tangent to the fork circular path so as to gradually engage the forks, and in that said metal sections (15) comprise S-shaped portions (17) to widen said cutting channel (12) near the area wherein said forks (4) leave the same.

2. A device according to claim 1, characterized in that said forks (4) form with said retaining metal sections (15), in the point of mutual convergence, and angle greater than 75°.

3. A device according to claim 2, characterized in that the rotational diameter of the free end of the forks (4) is at least equal to 600 mm.

4. A device according to any one of the preceding claims, characterized in that said rotor (1, 2) is longitudinally sectioned in two or more portions, the forks (4) of each portion being mounted in positions offset with respect to those of the adjacent portion.

5. A device according to claim 4, characterized in that each portion has a plurality of forks angularly spaced apart the same distance.

6. A device according to any one of the preceding claims, characterized in that said forks (4) are stamped in a single piece and secured to said rotor by welding or by screw (5).

7. A device according to any one of claims 4 to 6, characterized in that each portion of said rotor is provided with a plurality of support elements (3) to which the forks (4) are attached and in that each of said support elements (3) is provided with seats (6) for retaining the single forks, at a position spaced from their fork attaching area.

## Patentansprüche

1. Vorrichtung zum Heben und Schneiden von Futter auf einem Selbstladewagen für Futter von der Art mit einer Mehrzahl geformter Gabeln (4), die das Futter aufnehmen, in einen Schneidkanal (12), in den sich Schneidmesser (13) erstrecken, befördern und es dann abladen, wobei die Gabeln (4) feststehend auf dem Umfang eines um seine eigene Achse drehenden Rotors (1, 2) montiert sind, wobei diese Gabeln bogenförmige Vorderkanten haben und wobei Metallprofile (15) das geschnittene Futter am Austritt des Schneidkanals (12) zurückhalten, während die Gabeln (4) in den Metallprofilen (15) vorgesehene freie Räume durchgreifen, dadurch gekennzeichnet, daß die Scheidmesser (13) im Auslaufteil der bogenförmigen Bahn der mit Futter beladenen Gabeln (4) angeordnet sind und deren Schneidkanten einen kleinen Winkel mit der Tangente zur kreisförmigen Bahn der Gabeln (4) derart bilden, daß sie nacheinander in die Gabeln eingreifen, und daß die Metallprofile (15) S-förmige Abschnitte (17) umfassen, um den Schneidkanal (12) in der Nähe jenes Bereiches zu erweitern, wo die Gabeln (4) denselben verlassen.

2. Vorrichtung nach Anspruch 1, dadurch gekennzeichnet, daß die Gabeln (4) mit den Metallhalteprofilen (15) an der gegenseitigen Zusammenlaufstelle einen größeren Winkel als 75° bilden.

3. Vorrichtung nach Anspruch 2, dadurch gekennzeichnet, daß der Drehdurchmesser des freien Endes der Gabeln (4) wenigstens 600 mm entspricht.

4. Vorrichtung nach einem der vorausgehenden Ansprüche, dadurch gekennzeichnet, daß der Rotor (1, 2) in zwei oder mehrere Abschnitte längsgeteilt ist, wobei die Gabeln (4) von jedem Abschnitt in gegenüber jener der anschließenden Abschnitte versetzten Positionen montiert sind.

5. Vorrichtung nach Anspruch 4, dadurch gekennzeichnet, daß jeder Abschnitt eine Mehrzahl von Gabeln aufweist, die mit gleichem Winkelabstand untereinander gehalten sind.

6. Vorrichtung nach einem der vorausgehenden Ansprüche, dadurch gekennzeichnet, daß die Gabeln (4) in einem Stück gestanzt und am Rotor durch Schweißen oder mittels Schrauben (5) befestigt sind.

7. Vorrichtung nach einem der Ansprüche 4—6, dadurch gekennzeichnet, daß jeder Rotorabschnitt mit einer Mehrzahl von Tragelementen (3) versehen ist, an welche die Gabeln (4) befestigt sind, und daß jedes dieser Tragelemente (3) mit einem Sitz (6) versehen ist, um die einzelnen Gabeln in einer von ihrem Befestigungsbereich entfernten Position zu halten.

## Revendications

1. Dispositif pour élever et couper le fourrage sur une remorque autochargeuse pour fourrage du type ayant une pluralité de fourches profilées (4) qui prélèvent le fourrage, le transportent dans un canal du coupe (12) dans lequel des lames de coupe (13) font saillie et ensuite le déchargent, dans la quelle lesdites fourches (4) sont montées rigidement sur la périphérie d'un roteur (1, 2) tournant autour de son axe, lesdites fourches ayant des rebords antérieurs cambrés et dans laquelle des profilés métalliques (15) retiennent le fourrage coupé à la sortie dudit canal de coupe (12) pendant que lesdites fourches (4) passent à travers des espaces libres prévus entre lesdits profilés métalliques (15), caractérisé en ce que les lames de coupe (13) sont disposées dans la partie de sortie du parcours circulaire des fourches (4) chargés de fourrage et dont les arêtes coupants forment un petit angle avec la tangente au parcours circulaire des fourches de façon à s'engager graduellement avec les fourches et en ce que les profiles métalliques (15) comportent des parties en forme de S (17) pour élargir le canal de coupe (12) au voisinage de la zone dans laquelle lesdites fourches (4) sortent dudit canal de coupe.

2. Dispositif selon la revendication 1, caracterisé en ce que lesdites fourches (14) forment avec les profilés métalliques de retenue (15) un angle plus grand que 75° dans le point de convergence mutuelle.

3. Dispositif selon la revendication 2, caracterisé en ce que le diamètre du parcours circulaire de rotation de l'extrémité libre des fourches (4) est au moins égal à 600 mm.

4. Dispositif selon l'une des revendications précedentes, caractérisé en ce que ledit roteur (1, 2) est coupé longitudinalement en deux ou plusieurs parties, les fourches (4) de chaque partie étant montées dans des positions décalées par rapport à celles de la partie voisine.

5. Dispositif selon l'une des revendications précedentes, caracterisé en ce que chaque partie est pourvue d'une pluralité de fourches qui sont espacées angulairement d'un même distance.

6. Dispositif selon l'une des revendications précedentes, caractérisé en ce que lesdites fourches (4) sont estampées en une seule pièce et sont fixées audit roteur par soudure ou avec des vis (S).

7. Dispositif selon l'une des revendications 4—6, caracterisé en ce que chaque partie dudit roteur est pourvue d'une pluralité d'éléments support (3) auxquels les fourches (4) sont fixées et en ce que chacun desdits éléments support (3) est pourvu des sièges (6) pour rétenir les fourches individuelles dans une position écartée de leur position de fixage.

0 076 786

Fig.1

Fig.2

Fig.3

1